**Europäisches Patentamt**

**European Patent Office**

**Office européen des brevets**

(19)

(11) Veröffentlichungsnummer : **0 361 108 B1**

(12)

# EUROPÄISCHE PATENTSCHRIFT

(45) Veröffentlichungstag der Patentschrift :
**11.03.92 Patentblatt 92/11**

(51) Int. Cl.⁵ : **A61C 5/06**

(21) Anmeldenummer : **89115831.3**

(22) Anmeldetag : **28.08.89**

(54) **Anordnung zum Behandeln einer Mehrkomponentenmischkapsel, insbesondere für Dentalzwecke, mittels eines Vibrationsmischgeräts.**

(30) Priorität : **27.09.88 DE 3832757**

(43) Veröffentlichungstag der Anmeldung :
**04.04.90 Patentblatt 90/14**

(45) Bekanntmachung des Hinweises auf die
Patenterteilung :
**11.03.92 Patentblatt 92/11**

(84) Benannte Vertragsstaaten :
**CH DE FR GB IT LI NL SE**

(73) Patentinhaber : **Mühlbauer, Ernst
Elbgaustrasse 248
W-2000 Hamburg 53 (DE)**

(72) Erfinder : **Mühlbauer, Ernst
Elbgaustrasse 248
W-2000 Hamburg 53 (DE)**
Erfinder : **Engelbrecht, Jürgen, Dr.,
Dipl.-Chem.
Petkumstrasse 18
W-2000 Hamburg 76 (DE)**

(74) Vertreter : **Glawe, Delfs, Moll & Partner
Patentanwälte
Liebherrstrasse 20
W-8000 München 26 (DE)**

EP 0 361 108 B1

Jouve, 18, rue Saint-Denis, 75001 PARIS

**Beschreibung**

Die Erfindung bezieht sich auf eine Anordnung zum Behandeln einer Mehrkomponentenmischkapsel, insbesondere für Dentalzwecke, mittels eines Vibrationsmischgeräts, in der die Mischkapsel einen Mischraum und eine daran durch einen Berstverschluß getrennte Kammer zur Aufnahme einer flüssigen Komponente umfaßt, die von einer fest mit dem den Mischraum bildenden Behälterteil verbundenen ersten Wand und einer zweiten Wand begrenzt ist, die zum Öffnen des Berstverschlusses und zum Verdrängen der flüssigen Komponente aus der Kammer der ersten Wand unter der Einwirkung einer Aktivierungskraft näherbar ist.

Bei einem bekannten Typ von Mischkapseln für Dentalzwecke (DE-AS 12 87 251; DE-PS 24 00 970; DE-PS 19 39 316) ist der langgestreckte Mischraum von der Kammer durch eine Lochwand getrennt, durch die die Kammer auf der einen Seite begrenzt wird. Auf der anderen Seite wird sie von einem teleskopisch gegen den den Mischraum bildenden Kapselteil verschiebbaren Überfalldeckel oder einen Kolben begrenzt. Zur Aktivierung der Kapsel, d.h. zum Berstenlassen eines die flüssige Komponente enthaltenden Folienbeutels werden mittels eines besonderen Werkzeugs auf den Deckel bzw. den Kolben so hohe Kräfte ausgeübt, daß der Folienbeutel im Bereich einer in der Trennwand befindlichen Öffnung platzt und seinen Inhalt in den Mischraum ergießt. Der Folienbeutel liegt an der beweglichen Kammerwand mit einer Fläche an, deren Große ein Vielfaches der Öffnungsquerschnittsfläche beträgt. Es findet daher eine hydraulische Kraftübersetzung mit dem Ergebnis statt, daß die Kraft, die zum Verschieben der beweglichen Wand erforderlich ist, vielfach größer ist als die Kraft, die zur Zerstörung des Beutels im Öffnungsbereich notwendig wäre. Die auf die bewegliche Wand auszuübenden Kräfte sind daher beträchtlich und betragen mehrere Decanewton. Es ist erwogen worden, diesen Kraftaufwand durch Verwendung von schaltbaren Ventilgliedern zwischen der Kammer und dem Mischraum zu verringern (US-PS 25 27 991). Jedoch haben diese sich in die Praxis nicht einführen lassen, weil unter den Bedingungen der Massenfertigung hinreichend genaue Ventilglieder nicht wirtschaftlich herstellbar sind.

Bekannt sind auch Mischkapseln für dentale Zwecke (DE-PS 28 31 005), die ohne besondere Aktivierungshandlung allein durch die Mischbewegung aktiviert werden, indem ein innerhalb des Mischraums enthaltener Folienbeutel durch die bei der Mischvibration wirksamen Trägheitskräfte zerstört und entleert wird. Jedoch kann dies Prinzip nicht ohne weiteres bei spezifisch leichten Flüssigkeiten angewendet werden. Auch kann dieser Kapseltyp nicht als Applikationsspritze (DE-PS 19 39 316) verwendet werden, weil die im Mischraum enthaltenen Beutelreste die Entleerung des Mischraums durch eine Düsenöffnung behindern.

Schließlich ist eine Dentalkapsel bekannt (DE-OS 29 31 262), in welcher die flüssige Komponente ohne umgebenden Folienbeutel in der Kammer enthalten ist, wobei die Trennwand zwischen Mischraum und Kammer unter der Prallkraft eines im Mischraum enthaltenen Pistills derart verschiebbar ist, daß Ventilöffnungen zwischen Kammer und Mischraum geöffnet und die Flüssigkeit aus der Kammer durch diese Öffnungen hindurch in den Mischraum hinein verdrängt wird. Dies ist deshalb möglich, weil die zum Verschieben der Wand erforderliche Kraft gering ist. Schon geringe Kräfte können eine geringe Verschiebung der Trennwand bewirken, wobei die Gesamtverschiebung durch eine Vielzahl wiederholter, kleiner Einzelverschiebungen zustandegebracht wird. Jedoch hat die Kapsel den Nachteil, daß sie aufwendig in der Herstellung ist, weil die Passung der verschiebbaren Wand in der Kapsel hohen Dichtheitsanforderungen gerecht werden muß. Auch diese Kapsel kann nicht in der Form einer Applikationsspritze ausgeführt werden, weil das Pistill im Mischraum verhindert, daß der Inhalt des Mischraums mittels eines Kolbens vollständig entleert wird.

Der Erfindung liegt daher die Aufgabe zugrunde, die Handhabbarkeit der eingangs angegebenen Dentalkapsel, die das Vorhandensein eines Berstverschlusses, insbesondere eines die flüssige Komponente enthaltenden Folienbeutels, voraussetzt, zu erleichtern. Ferner soll die Kapsel für unterschiedliche Anwendungsformen, einschließlich der Ausführung als Applikationsspritze, geeignet sein.

Die erfindungsgemäße Lösung besteht darin, daß auf der dem Mischraum abgewandten Seite der Kammer eine etwa in Richtung der Vibration des Mischgeräts verlaufende Führung vorgesehen ist, in der der zweiten Wand der Kammer eine im Verhältnis zu ihr bewegliche und durch die Führung ihr zugeordnete, mit ihr zusammenwirkende Stirnfläche eines ersten Schlagkörpers gegenübersteht und daß mit dem den Mischraum bildenden Teil der Kapsel ein zweiter Schlagkörper verbunden ist, wobei einer der beiden Körper mit dem Schwingantrieb des Vibrationsmischgeräts verbunden und der andere diesem gegenüber mittels der Führung beweglich ist.

Die Erfindung umfaßt zwei Schritte. Der erste besteht in der Anwendung des an sich bekannten Schlagkörpers auf die Öffnung des Berstverschlusses. Der zweite betrifft die konstruktive Ausgestaltung.

Der erste Schritt ist in sofern überraschend, als - wie oben beschrieben hohe Kräfte zum Berstenlassen eines Folienbeutels erforderlich sind. Man mußte erwarten, daß dies eine so große Schlagkörpermasse verlangen würde, daß bei einem einzelnen Schlag der Berstdruck des Folienbeutels überschritten werden kann. Eine solche Masse würde so groß sein, daß sie in dem begrenzten Bereich einer Mischkapsel nicht unterzubringen ist und nicht durch die begrenzten Antriebskräfte handelsüblicher Vibrationsmischgeräte bewegt werden kann. Jedoch hat sich überraschenderweise gezeigt, daß eine solche Größe der Masse nicht erforderlich ist. Auch wenn die Kraft des einzelnen Schlags wesentlich geringer ist als die statisch wirkende Kraft, die den Beutel zum Bersten bringt, kann durch vielfache, rasche Schlagwiederholung die Beutelöffnung erreicht werden. Es hat sich gezeigt, daß die Öffnung und Entleerung des Folienbeutels sich in einer Zeitspanne von einer bis mehreren Sekunden vollzieht, was einer Schlagzahl von der Größenordnung 100 entspricht. Daraus muß man schließen, daß Ermüdungs- oder Schwingungserscheinungen beim Öffnen des Beutels eine Rolle spielen, die bewirken, daß auch mit geringer Schlagkörpermasse und entsprechend geringen Massenkräften sich die Öffnung des Beutels mit Sicherheit vollzieht.

Der zweite Schritt besteht in der konstruktiven Ausführung, nämlich in der Anordnung eines Schlagkörpers außerhalb des Mischraums ausschließlich für die Zwecke der Aktivierung der Kapsel. So bleibt der Mischraum von Fremdkörpern frei und kann als Ausspritzzylinder einer Applikationskapsel eingesetzt werden.

Weil unter einem Berstverschluß in erster Linie ein Folienbeutel zu verstehen ist, der im Bereich einer Öffnung der den Mischraum und die Kammer trennenden Wand zum Bersten gebracht wird, wird im folgenden nur von einem Folienbeutel gesprochen. Jedoch sind auch andere Ausführungen des Berstverschlusses denkbar, beispielsweise in der Form einer über die Öffnung gesiegelten Berstfolie oder einer einstückig mit der Wand ausgebildeten Membran, die Sollbruchlinien enthalten kann. Die flüssige Komponente ist dann frei in der Kammer enthalten, wobei die zweite Kammerwand dicht abschließend ausgeführt ist.

Bei einer bevorzugten Ausführung der Erfindung ist die Kapsel in der Führung frei beweglich und ist der erste Schlagkörper mit dem Schwingantrieb verbunden, wobei zweckmäßigerweise die Führung und zumindest ein Teil des ersten Schlagkörpers von einem die Kapsel aufnehmenden Führungsbehälter gebildet ist, der vorzugsweise als solcher in das Vibrationsmischgerät einspannbar ist oder einen Teil des Vibrationsmischgeräts bildet. Dabei kann der zweite Schlagkörper von dem den Mischraum bildenden Kapselteil gebildet oder mit ihm fest verbunden sein. Die Kapsel wird im Führungsbehälter zwischen dessen Enden hin- und hergeworfen, wobei die zweite, bewegliche Wand der Kammer gegen die ihr gegenüberliegende Stirnwand des Führungsbehälters prallt, wobei die auf die Kammer einwirkende Aktivierungskraft durch die Geschwindigkeitsdifferenz sowie die kleinere der beteiligten Schlagkörpermassen bestimmt ist.

Bei einer anderen vorteilhaften Ausführung ist die Führung von einer mit Schwingantrieb verbundenen Kapselaufnahme gebildet, in der der erste Schlagkörper in Vibrationsrichtung frei beweglich ist, wobei der zweite Schlagkörper von der Kapselaufnahme gebildet ist. Der den Mischraum bildende Kapselteil kann in diesem Fall mit der Kapselaufnahme fest verbunden sein, wobei sich lediglich der erste Schlagkörper in dem freien Raum benachbart der beweglichen Kammerwand bewegt. Bei einer anderen Ausführung kann auch die Kapsel in der Kapselaufnahme in Vibrationsrichtung beweglich sein, so daß sich sowohl die Kapsel als auch der erste Schlagkörper in der Kapselaufnahme frei bewegen. Die Aktivierungskräfte werden dann von dem Schlagkörper auf die bewegliche Kammerwand ausgeübt, wenn die Kapsel mit ihrem dem ersten Schlagkörper abgewandten Ende an der Stirnfläche der Kapselaufnahme anliegt und der erste Schlagkörper gegen die bewegliche Kammerwand prallt. In diesem entscheidenden Augenblick ist die Kapsel mit dem zweiten Schlagkörper durch Anlage fest verbunden, so daß sie sich während des Aufschlags des ersten Schlagkörpers daran abstützen kann. Es kommt nicht darauf an, ob außerdem noch Zusammenstöße zwischen dem ersten Schlagkörper und der Kapsel stattfinden, wenn letztere nicht abgestützt ist.

Bei einer wieder weiteren Ausführungsform kann die Führung fest an der Kapsel angeordnet sein, wobei der erste Schlagkörper darin beweglich ist, während der zweite Schlagkörper von dem den Mischraum bildenden Kapselteil und gegebenenfalls von damit fest verbundenen Teilen des Schwingantriebs gebildet ist. Dabei kann die feste Verbindung der Führung mit der Kapsel so ausgebildet sein, daß die Führung ständig einen Teil der Kapsel bildet und somit die Kapsel als solche bereits sämtliche, das selbsttätige Aktivieren ermöglichenden Elemente enthält. Der Vorteil dieser Ausführung besteht darin, daß die Kapsel ohne weitere Maßnahmen in das Vibrationsmischgerät eingespannt und die Aktivierung und Mischung ohne Zutun stattfindet. Stattdessen ist es aber auch möglich, die mehrfach verwendbare Führung mit dem Schlagkörper erst dann mit der als Einwegartikel ausgebildeten Kapsel zu verbinden, wenn die Aktivierung und Mischung erfolgen sollen.

Statt eines in einer Führung frei beweglichen Schlagkörpers kann auch ein mit der Kapsel verbundener, vorzugsweise in ständiger Anlage an der beweglichen Wand bzw. an dem Folienbeutel gehaltener Schlagkörper verwendet werden.

Wenn der Schlagkörper in oder an der Kapsel angeordnet ist und diese mit einer Applikationsdüse versehen ist, durch die die gemischte Masse unmittelbar appliziert werden kann, ist die Führung des Schlagkörpers bzw. der Schlagkörper selbst zweckmäßigerweise als Kolben ausgeführt, durch den mittels eines Applikationsgeräts die Vorschubkraft auf den die Mischkammer begrenzenden Applikationskolben ausgeübt werden kann. Wenn im Zusammenhang der Erfindung davon die Rede ist, daß die den Mischraum von der Kammer trennende Wand fest mit dem die Mischkammer bildenden Kapselteil verbunden ist, so soll dadurch nicht ausgeschlossen werden, daß diese Wand, beispielsweise als Teil eines solchen Applikationskolbens, in anderen Funktionszusammenhängen gegenüber dem den Mischraum bildenden Kapselteil beweglich ist.

Der Vorteil eines frei beweglichen Schlagkörpers besteht darin, daß größere Geschwindigkeitsdifferenzen zwischen dem Schlagkörper und dem zugehörigen Kapselteil auftreten können, weil der Kapselteil unter dem Einfluß des Schwingantriebs bereits eine Bewegungsumkehr durchgeführt haben kann, während der Schlagkörper sich noch in der vorherigen Richtung weiterbewegt. Damit dies möglich ist, soll die freie Bewegungsstrecke des Schlagkörpers in dem ihn aufnehmenden Führungsteil mindestens etwa ein Zehntel der Schwingantriebsamplitude betragen.

Bei Verwendung handelsüblicher Folienbeutel und Dental-Mischgeräte kann die Masse des ersten Schlagkörpers in der Regel geringer als 10 Gramm, vorzugsweise sogar geringer als 5 Gramm sein.

Die Erfindung wird im folgenden näher unter Bezugnahme auf die Zeichnung erläutert, die vorteilhafte Ausführungsbeispiele schematisch veranschaulicht. Darin zeigen:

Fig. 1 die schematische Darstellung einer in einem Vibrationsmischgerät eingespannten ersten Ausführungsform,

Fig. 2 und 3 eine Seiten- und Stirnansicht einer Variante der ersten Ausführungsform,

Fig. 4 eine weitere Variante der ersten Ausführungsform

Fig. 5 eine der Fig. 1 entsprechende Darstellung einer zweiten Ausführungsform,

Fig. 6 eine der Fig. 1 entsprechende Darstellung einer dritten Ausführungsform

Fig. 7 eine detailliertere Darstellung der dritten Ausführungsform,

Fig. 8 eine der Fig. 1 entsprechende Darstellung einer vierten Ausführungsform,

Fig. 9 ein Geschwindigkeits- und Beschleunigungsdiagramm der vierten Ausführung und

Fig. 10 eine Variante der vierten Ausführungsform.

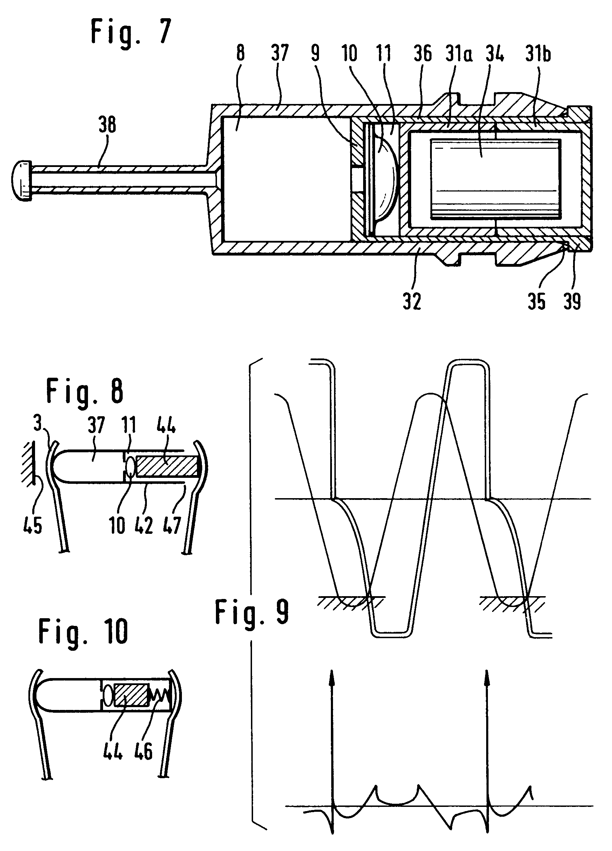

In Fig. 1 erkennt man einen langgestreckten, aus Behälterteil 1 und Deckel 2 bestehenden Behälter, der zwischen den Klauen 3 eines handelsüblichen Vibrationsmischgeräts eingespannt ist. Wie bekannt, sitzen die Klauen 3 an federnd-zueinander hin gespannten Armen 4, um die Enden des langgestreckten Behälters 1, 2 sicher fassen zu können. Die Vibration erfolgt mit einer Frequenz von mindestens 2.500 min$^{-1}$, vorzugsweise etwa 3.000 min$^{-1}$ etwa in Pfeilrichtung 5, d.h. etwa in Längsrichtung des Behälters 1, 2.

Der Behälter 1, 2 bildet einen langgestreckten, zylindrischen Hohlraum zur Aufnahme und Führung der Kapsel 6. Diese bildet innerhalb eines Teils 7 einen Mischraum 8, der durch eine Lochwand 9 von einem die flüssige Komponente enthaltenden Folienbeutel 10 getrennt ist, der in einer Kammer 11 enthalten ist, die zwischen der Lochwand 9 und einem Überfalldeckel 12 gebildet ist, der teleskopisch auf den Kapselteil 7 aufschiebbar ist, wobei er in seiner jeweiligen Stellung durch Reibschluß gehalten ist. Die Kapsel 6 ist länglich, wie man dies von handelsüblichen Dentalkapseln kennt, im Durchmesser etwas Spiel gegenüber dem zylindrischen Innenraum des Behälters 1, so daß er leicht darin in Längsrichtung gleiten kann.

Unter der Mischvibration wird die Kapsel 6 zwischen den Stirnwänden, die den Innenraum des Behälters 1, 2 begrenzen, hin- und hergeworfen, wobei auf den Deckel 12 beim Anschlag an der in der Zeichnung rechten Stirnwand Stoßkräfte wirken, die von der Geschwindigkeitsdifferenz sowie von der Größe der beteiligten Massen abhängen. Die Geschwindigkeitsdifferenz wird durch die Frequenz des Schwingantriebs und die Beziehung des freien Wegs der Kapsel 6 in dem Innenraum des Behälters 1,2 zu der Schwingamplitude dieses Behälters bestimmt. Die freie Bewegungsstrecke der Kapsel in dem Behälter soll kleiner sein als die Schwingamplitude des Behälters und ist vorzugsweise kleiner als die halbe Schwingamplitude, vorzugsweise im Bereich zwischen einem Zwanzigstel und einem Drittel dieser Amplitude. Dies gilt auch für andere Ausführungsformen. Die beteiligten Massen werden einerseits von dem Deckel 2 und den damit im Augenblick des Stoßes fest verbundenen Teilen gebildet, nämlich der Klaue 3 und einem Teil des zugehörigen Arms 4. Auch der Behälter 1 kann zu dieser Masse gerechnet werden, wenn er fest mit dem Behälter 2 verbunden ist. Diese Teile gemeinsam bilden den ersten Schlagkörper. Der zweite Schlagkörper wird von denjenigen Teilen gebildet, die mit der Lochwand 9 fest verbunden sind, also von dem den Mischraum 8 bildenden Kapselteil 7. Maßgebend ist die geringere der beiden Schlagkörpermassen, also in diesem Beispiel in der Regel die Masse des Kapselteils 7. Sie sollte mindestens etwa 3 Gramm betragen, wenn eine Schwingfrequenz von 3000 min$^{-1}$ vorausgesetzt werden kann.

Unter der Mischvibration schlägt der Deckel 12 der Kapsel so häufig gegen den Deckel 2 des Behälters 1, 2, bis der Folienbeutel 10 birst und seinen Inhalt durch die Lochwand 9 in den Mischraum 8 ergießt, bis zur vollständigen Verdrängung der flüssigen Komponente aus der Kammer 11.

Kapsel 6 und Behälter 1, 2 können als einfach zu verwendende Einheit in den Handel gebracht werden. Statt dessen ist es auch möglich, lediglich die Kapsel 6 als Einwegeinheit zu behandeln, während der äußere Behälter 1, 2 mehrfach verwendet wird.

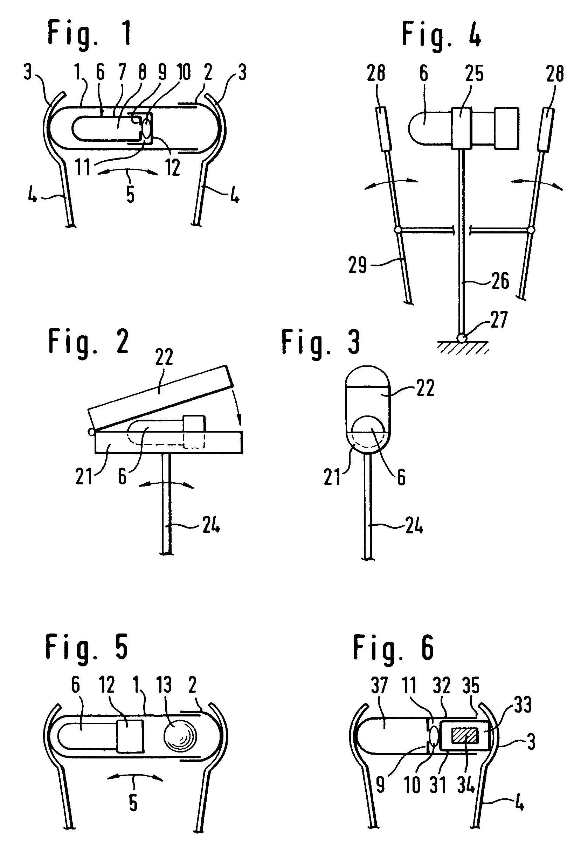

Es versteht sich, daß der Behälter in seiner Gestalt vielfach abgewandelt werden kann und sogar seinen Behältercharakter verlieren kann, ohne seine Funktionsfähigkeit einzubüßen. Während die Ausführung gemäß Fig. 1 voraussetzt, daß der Behälter 1, 2 ein gesondertes, in die Klauen 3 des Mischgeräts einzuspannendes Teil ist, demonstriert die Variante gemäß Fig. 2 und 3 die Möglichkeit, ihn als Teil des Mischgeräts auszubilden, indem er fest mit einem Schwingarm 24 verbunden ist, der an die Stelle der Schwingarme 4 tritt. Der Behälter besteht aus einem ersten, mit dem Schwingarm 24 starr verbundenen Teil 21 und einem Deckelteil 22, der zum Einlegen und Herausnehmen der Kapsel 6 von dem Teil 21 lösbar ist und durch Federkraft, einen Schnappverschluß oder dergleichen in der geschlossenen Lage gehalten werden kann. Die Führung braucht nicht behälterartig ausgebildet zu sein, wie die Ausführungsvariante gemäß Fig. 5 zeigt.

In der weiteren Variante der ersten Ausführung, die in Fig. 4 dargestellt ist, wird die Kapsel 6 von einer Klemme 25 gehalten, die an einem Arm 26 befestigt ist, der bei 27 gelenkig im Mischgerät gelagert ist. Klemme 25 und Arm 26 sind massearm ausgebildet. Die Kapsel wird durch sie in ihrer Längsrichtung längs eines Kreisbogens um das Gelenk 27 geführt. Statt eines Gelenks 27 könnte der Arm 26 auch federnd ausgebildet sein. Im Führungsweg der Kapsel 6 befinden sich Anschlagplatten 28, deren Abstand voneinander etwas größer ist als die Länge der Kapsel 6. Sie sind an im wesentlichen synchron schwingenden Schwingarmen 29 befestigt, die abwechselnd auf die Enden der Kapsel 6 treffen und diese zwischen sich hin und her werfen. Die Funktion gleicht derjenigen der Ausführungen gemäß Fig. 1 bis 3, wobei der erste Schlagkörper von der rechten Anschlagplatte und der zweite Schlagkörper von dem den Mischraum bildenden Teil der Kapsel gebildet sind.

Die zweite Ausführungsform gemäß Fig. 5 unterscheidet sich von derjenigen gemäß Fig. 1 dadurch, daß außer der Kapsel 6 im Raum des Behälters 1, 2 sich auf der Seite des Kapseldeckels 12 ein Schlagkörper 13 aus spezifisch schwerem Material wie Metall befindet, der beispielsweise Kugelform hat und dessen Durchmesser ein wenig geringer ist als der Innendurchmesser des äußeren Kapselkörpers 1. Die gemeinsame Länge der Kapsel 6 und des Schlagkörpers 13 ist geringer als die Länge des Innenraums des Behälters 1, 2.

Der Stoß findet statt zwischen der Kugel 13 als erstem Schlagkörper und dem Deckel 12 der Kapsel 6. In der Regel ist die Kapsel leichter als der Schlagkörper 13, so daß sie von diesem gegen die linke Stirnwand des Behälters 1,2 geschoben und dort abgestützt wird. Daher wird der erste Schlagkörper von der Kugel 13 und der zweite Schlagkörper von den gemeinsamen Massen des Kapselteils 7, des Behälters 1 und der linken Klaue 3 gebildet. Im übrigen ist die Funktion ebenso wie im Falle der ersten Ausführungsform.

In der dritten Ausführungsform gemäß Fig. 6 wird die Kammer 11 einerseits von der Lochwand 9 und andererseits von der Stirnwand eines Hohlkolbens 31 gebildet, der in einer hinteren Verlängerung 32 des Behälterteils 37 unter schwachem Reibschluß geführt ist. Im Hohlraum 33 des Hohlkolbens 31 befindet sich ein Schlagkörper 34, dessen Länge ein wenig geringer ist als die freie Länge des Raums 33. Bei jeder zweiten Bewegungsumkehr schlägt der Schlagkörper 34 gegen die kammerseitige Stirnwand des Hohlkolbens 31 und preßt diese gegen den Folienbeutel 10, um ihn bersten zu lassen und ihn zu entleeren. Die Funktion gleicht insoweit derjenigen der ersten Ausführungsform. Damit der Hohlkolben 31 möglichst ständig in Anlage an dem Folienbeutel 10 verbleibt, ist zweckmäßigerweise vorgesehen, daß er durch eine nachgiebige Kraft in der Zeichnung nach links gedrängt wird. Diese kann - wie in der Zeichnung angedeutet - dadurch erzeugt werden, daß der Hohlkolben 31 über das hintere Ende 35 der Wand 32 hinausragt, so daß er von der Klemmkraft der Klaue 3 beaufschlagt wird.

Ein bevorzugtes Ausführungsbeispiel der dritten Ausführungsform ist in Fig 7 detailliert im Längsschnitt in vergrößertem Maßstab dargestellt. Man erkennt darin den Kapselteil 37, der am vorderen Ende eine Applikationsdüse 38 trägt. Die Lochwand 9 ist als Stirnwand eines Kolbens 36 ausgebildet, dessen hinterer Rand 39 nach außen über den hinteren Rand 35 des hinteren Wandteils 32 des Behälterteils 37 faßt. Hinter dem Folienbeutel 10 befindet sich innerhalb des Kolbens 36 der Hohlkolben 31, der sich aus einer vorderen Hälfte 31a und einer hinteren Hälfte 31b zusammensetzt, die nicht miteinander verbunden sind und nur durch einen schwachen Reibschluß innerhalb des Kolbens 36 zusammengehalten werden. Sie nehmen den Schlagkörper 34 auf, der etwa 3 mm kürzer ist als der ihn aufnehmende Raum im Hohlkolben 31.

Wenn die Kapsel in ein Mischgerät eingespannt ist und der Mischvibration ausgesetzt wird, schlägt der Schlagkörper 34 wechselnd gegen die vordere und die hintere Stirnwand des Hohlkolbens 31. Beim Schlag gegen die vordere, die Kammer 11 begrenzende Stirnwand schiebt er den vorderen Hohlkolbenteil 31a gegen den Folienbeutel 10 und erzeugt darin einen Druck, der nach vielfach wiederholtem Aufschlagen schließlich zum Bersten desselben im Bereich der Öffnung in der Lochwand 9 führt. Bei weiteren Schlägen schiebt er den vorderen Hohlkolbenteil 31a gegen die Lochwand 9 bis zur vollständigen Verdrängung der fließfähigen Komponente aus dem Folienbeutel 10 in den Mischraum 8. Da der vordere Teil 31a des Hohlkolbens unabhängig ist von dem hinteren Teil 31b, wird sein Vorschieben nicht dadurch behindert, daß der Schlagkörper 34 dazu neigt, den hinteren Hohlkolbenteil 31b in der Zeichnung nach rechts bzw. gegen einen nicht gezeigten Anschlag zu schieben.

Während des Mischvorgangs ist die Lochwand 9 gegen die darauf einwirkenden Kräfte durch die Anlage des hinteren Rands 39 des Kolbens 36 an dem hinteren Rand 35 des Behälterteils 37 gesichert und insoweit fest mit dem Kapselteil 37 verbunden. Wenn die Mischung vollendet und der Kapselinhalt mittels eines Applikationsgeräts aus der Kapsel herausgedrückt werden soll, wird der Hohlkolben 31 vorgeschoben, wodurch der hintere, ausragende Rand 39 des Kolbens 36 seine innere Abstützung verliert und daher dem Vorschieben des Kolbens 36 keinen Widerstand mehr entgegensetzt. Wegen näherer Erläuterung wird Bezug genommen auf die Gebrauchsmusteranmeldung G 88 09 184.8.

Die Ausführung gemäß Fig. 7 hat sich mit folgenden Maßangaben bewährt:

Gewicht des Schlagkörpers:          3 g

Hubweg des Schlagkörpers bei

     Beginn der Vibration:          3 mm

Hubweg am Ende der Aktivierung:    5 mm

Aktivierungsbeginn bei 2.400 $min^{-1}$: 4 - 5 sec.

Aktivierungsbeginn bei

     3.000 - 3.500 $min^{-1}$:          ca. 3 sec.

Beutelfolie:                 Aluminium weich 0,015 mm,

                        kaschiert mit 15 $g/m^2$

                        Polypropylen

Durchmesser der Bohrung

     in der Lochwand:            3 mm

Die vierte Ausführungsform gemäß Fig. 8 unterscheidet sich von derjenigen gemäß Fig. 6 dadurch, daß der Schlagkörper 44 in der Kapsel nicht frei beweglich ist. Die Aktivierungskraft wird dadurch erzeugt, daß die Kapsel insgesamt durch rasche Bewegungsumkehr einer hohen, möglichst schlagartigen Bewegung ausgesetzt wird. Dies ist in Fig. 8 dadurch angedeutet, daß links neben der Klaue 3 ein Anschlag 45 dargestellt ist, gegen den die Klaue 3 am Ende jedes Schwingungsvorgangs anschlägt, so daß die Geschwindigkeit der Kapsel schlagartig abgebremst und dadurch eine hohe Beschleunigung ausgeübt wird. In der Praxis zieht man es im allgemeinen vor, die rasche Bewegungsumkehr nicht durch einen Anschlag sondern durch entsprechende Ausführung des Schwingarmantriebs zu bewerkstelligen, beispielsweise durch geeignete Ausführung des die Motorbewegung auf die Schwingarme übertragenden Getriebes.

Es ist nicht erforderlich, kann aber vorteilhaft sein, den Schlagkörper 44, der in diesem Ausführungsbeispiel auch die eine der die Kammer 11 begrenzenden Wände bildet, in steter Anlage an dem Folienbeutel zu halten, was im Ausführungsbeispiel gemäß Fig. 8 dadurch geschieht, daß die rechte Klaue 3 an dem über das Ende 47 der Behälterwand 42 hinausragenden Schlagkörper 44 angreift. In der Variante gemäß Fig. 10 ist zu diesem Zweck innerhalb der Kapsel eine Feder 46 vorgesehen.

Fig. 9 zeigt im oberen Teil mit dünner Linie den Weg und mit Doppellinie die Geschwindigkeit der Kapsel. Der Weg wird an einem Ende der Schwingung durch den Anschlag 45 abgeschnitten, so daß die Geschwindigkeit an dieser Stelle abrupt auf Null (oder im Falle elastischen Stoßes sogar in die Gegenrichtung) geht. Entsprechend weist das darunter abgebildete Beschleunigungsdiagramm an dieser Stelle eine hohe Spitze auf.

**Patentansprüche**

1. Anordnung zum Behandeln einer Mehrkomponentenmischkapsel, insbesondere für Dentalzwecke, mittels eines Vibrationsmischgeräts, in der die Mischkapsel (6) einen Mischraum (8) und eine daran durch einen Berstverschluß (10) getrennte Kammer (11) zur Aufnahme einer flüssigen Komponente umfaßt, die von einer fest mit dem den Mischraum (8) bildenden Kapselteil (7) verbundenen ersten Wand (9) und einer zweiten Wand (12) begrenzt ist, die zum Öffnen des Berstverschlusses (10) und zum Verdrängen der flüssigen Komponente aus der Kammer (11) der ersten Wand (9) unter der Einwirkung einer Aktivierungskraft näherbar ist, dadurch gekennzeichnet, daß auf der dem Mischraum (8) abgewandten Seite der Kammer (11) eine etwa in Richtung (5) der Vibration des Mischgeräts verlaufende Führung (1, 2; 21, 21; 31; 42; 26, 27, 29) vorgesehen ist, in der der zweiten Wand (12) der Kammer (11) eine ihr gegenüber bewegliche und durch die Führung ihr zugeordnete, mit ihr zusammenwirkende Stirnfläche eines ersten Schlagkörpers (2; 21, 22; 28; 13; 34; 44) gegenübersteht und daß mit dem den Mischraum (8) bildenden Teil (7) der Kapsel (6) ein zweiter Schlagkörper (7; 1; 7, 28;

37; 3, 45) verbunden ist, wobei einer der beiden Körper mit dem Schwingantrieb des Vibrationsmischgeräts verbunden und der andere diesem gegenüber mittels der Führung beweglich ist.

2. Anordnung nach Anspruch 1, dadurch gekennzeichnet, daß die Kapsel (6) in der Führung (1, 2; 21, 22; 25 bis 27) frei beweglich ist und der erste Schlagkörper (2; 21, 22; 28) mit dem Schwingantrieb verbunden ist.

3. Anordnung nach Anspruch 2, dadurch gekennzeichnet, daß die Führung und zumindest ein Teil des ersten Schlagkörpers von einem die Kapsel aufnehmenden Führungsbehälter (1, 2; 21, 22) gebildet ist.

4. Anordnung nach Anspruch 3, dadurch gekennzeichnet, daß der Führungsbehälter in Klauen (3) des Vibrationsmischgeräts einspannbar ist.

5. Anordnung nach Anspruch 3, dadurch gekennzeichnet, daß der Führungsbehälter (21, 22) ein Teil des Vibrationsmischgeräts ist.

6. Anordnung nach einem der Ansprüche 2 bis 5, dadurch gekennzeichnet, daß der zweite Schlagkörper (7) von dem den Mischraum bildenden Kapselteil (7) gebildet oder mit diesem fest verbunden ist.

7. Anordnung nach Anspruch 1, dadurch gekennzeichnet, daß die Führung von einer mit Schwingantrieb (4) verbundenen Kapselaufnahme (1, 2) gebildet ist, in der der erste Schlagkörper 13 in Vibrationsrichtung 5 frei beweglich ist, und daß der zweite Schlagkörper von der Kapselaufnahme (1, 2) gebildet ist.

8. Anordnung nach Anspruch 7, dadurch gekennzeichnet, daß der den Mischraum (8) bildende Kapselteil (7) mit der Kapselaufnahme (1, 2) fest verbunden ist.

9. Anordnung nach Anspruch 7, dadurch gekennzeichnet, daß die Kapsel (6) in der Kapselaufnahme (1, 2) in Vibrationsrichtung frei beweglich ist.

10. Anordnung nach Anspruch 1, dadurch gekennzeichnet, daß Führung (31, 42) fest an der Kapsel (6) angeordnet ist und der erste Schlagkörper (34, 44) darin beweglich ist, wobei der zweite Schlagkörper von dem den Mischraum (8) bildenden Kapselteil (7) und gegebenenfalls von damit fest verbundenen Teilen (3, 4) des Schwingantriebs gebildet ist.

11. Anordnung nach Anspruch 10, dadurch gekennzeichnet, daß der erste Schlagkörper (34) in der Führung (31) frei beweglich ist.

12. Anordnung nach Anspruch 10, dadurch gekennzeichnet, daß der Schlagkörper (44) durch Federkraft gegen die Kammer (11) gedrängt ist.

13. Anordnung nach Anspruch 11 oder 12, dadurch gekennzeichnet, daß die Führung (31) bzw. der Schlagkörper (44) als Kolben ausgebildet ist.

14. Anordnung nach einem der Ansprüche 1 bis 13, dadurch gekennzeichnet, daß die freie Bewegungsstrecke des frei beweglichen Schlagkörpers (7; 13; 7, 28) im Verhältnis zu seiner Führung (1, 2; 31; 26 bis 29) mindestens etwa ein Zehntel der Schwingantriebsamplitude ist.

15. Anordnung nach einem der Ansprüche 1 bis 14, dadurch gekennzeichnet, daß die Masse des frei beweglichen Schlagkörpers kleiner ist als 10 Gramm.

## Claims

1. An arrangement for treating a multicomponent mixture capsule, particularly for dental purposes, by means of a vibration mixing device, on which the mixing capsule (6) comprises a mixing cavity (8), and a chamber (11) separated from the latter by a bursting seal (10) to take a liquid component, which chamber is bounded by a first wall (9) firmly attached to the part (7) of the capsule forming the mixing cavity (8), and a second wall (12) which can approach the first wall (9) to break the bursting seal (10) and to displace the liquid component from the chamber (11) under the action of an activating force, characterised in that a guide (1, 2; 21, 21; 31; 42; 26, 27, 29) is provided on the side of the chamber (11) remote from the mixing cavity (8) running approximately in the direction (5) of vibration of the mixing device, in which a front face of a first striker body (2; 21, 22; 28; 13; 34; 44) is opposite the second wall (12) of the: chamber (11), which front face can move against the said second wall and is attached to it by the guide and acts together with it, and that a second striker body (7; 1; 7, 28; 37; 3, 45) is attached to the part (7) of the capsule (6) which forms the mixing cavity (8), wherein one of the two bodies is attached to the oscillating drive of the vibration mixing device and the other can move against the first one via the guide.

2. An arrangement according to Claim 1, characterised in that the capsule (6) can move freely in the guide (1, 2; 21, 22; 25 to 27) and the first striker body (2; 21, 22; 28) is attached to the oscillating drive.

3. An arrangement according to Claim 2, characterised in that the guide and at least a part of the first striker body is formed from the guide vessel which contains the capsule.

4. An arrangement according to Claim 3, characterised in that the guide vessel can be clamped in claws (3) of the vibration mixing device.

5. An arrangement according to Claim 3, characterised in that the guide vessel (21, 22) is part of the vibration mixing device.

6. An arrangement according to any one of Claims 2 to 5, characterised in that the second striker body (7) is formed from the part (7) of the capsule which forms the mixing cavity or is firmly attached to that part.

7. An arrangement according to Claim 1, characterised in that the guide is formed from a capsule receptacle (1, 2) attached to the oscillating drive (4), in which the first striker body (13) can move freely in the direction of vibration, and that the second striker body is formed from the capsule receptacle (1, 2).

8. An arrangement according to Claim 7, characterised in that the part (7) of the capsule which forms the mixing cavity (8) is firmly attached to the capsule receptacle (1, 2).

9. An arrangement according to Claim 7, characterised in that the capsule (6) can move freely in the direction of vibration in the capsule receptacle (1, 2).

10. An arrangement according to Claim 1, characterised in that guide (31, 42) is disposed fixed on the capsule (6) and the first striker body (34, 44) can move therein, wherein the second striker body is formed from the part (7) of the capsule which forms the mixing cavity (8) and if necessary from parts (3, 4) of the oscillating drive which are firmly attached to that part.

11. An arrangement according to Claim 10, characterised in that the first striker body (34) can move freely in the guide (31).

12. An arrangement according to Claim 10, characterised in that the striker body (44) is pressed against the chamber (11) by spring pressure.

13. An arrangement according to Claims 11 or 12, characterised in that the guide (31) or the striker body (44) is formed as a piston.

14. An arrangement according to any one of Claims 1 to 13, characterised in that the extent of free movement of the freely movable striker body (7; 13; 7, 28) in relation to its guide (1, 2; 31; 26 to 29) is at least a tenth of the amplitude of the oscillating drive.

15. An arrangement according to any one of Claims 1 to 14, characterised in that the mass of the freely movable striker body is less than 10 grams.


## Revendications

1. Dispositif pour la manipulation, au moyen d'un agitateur à vibration, d'une capsule de mélange de plusieurs composants, utilisable en particulier en dentisterie, dans lequel la capsule mélangeuse (6) comprend un espace de mélange (8) et une chambre (11) qui est séparée de celui-ci par un obturateur éclatable (10), est destinée à recevoir un composant liquide et est limitée par une première paroi (9) solidaire de la partie (7) de la capsule formant l'espace de mélange (8) et par une seconde paroi (12) qui, sous l'action d'une force d'activation, peut se rapprocher de la première paroi (9) afin d'ouvrir l'obturateur éclatable (10) et chasser le composant liquide de la chambre (11), caractérisé en ce qu'il est prévu, du côté de la chambre (11) situé à l'opposé de l'espace de mélange (8), un guide (1, 2; 21, 21; 31; 42; 26, 27, 29) qui s'étend à peu près dans la direction (5) de la vibration du mélangeur, guide dans lequel fait face, à la seconde paroi (12) de la chambre (11), une surface frontale d'un premier corps frappeur (2; 21, 22; 28; 13; 34; 44) qui est mobile par rapport à cette paroi, lui est associée par le guide et coopère avec elle, et en ce qu'un second corps frappeur (7; 1; 7, 28; 37; 3, 45) est raccordé à la partie (7) de la capsule (6) qui forme l'espace de mélange (8), l'un des deux corps étant raccordé au mécanisme d'entraînement en oscillation de l'agitateur à vibration et l'autre étant mobile par rapport à lui au moyen du guide.

2. Dispositif selon la revendication 1, caractérisé en ce que la capsule (6) est mobile librement dans le guide (1, 2; 21, 22; 25 à 27) et en ce que le premier corps frappeur (2; 21, 22; 28) est raccordé au mécanisme d'entraînement en oscillation.

3. Dispositif selon la revendication 2, caractérisé en ce que le guide et une partie au moins du premier corps frappeur sont constitués par une boîte-guide (1, 2; 21, 22) qui reçoit la capsule.

3. Dispositif selon la revendication 3, caractérisé en ce que la boîte-guide peut être serrée dans des mâchoires (3) de l'agitateur à vibration.

5. Dispositif selon la revendication 3, caractérisé en ce que la boîte-guide (21, 22) fait partie de l'agitateur à vibration.

6. Dispositif selon l'une quelconque des revendications 2 à 5, caractérisé en ce que le second corps frappeur (7) est constitué par la partie (7) de la capsule formant l'espace de mélange ou est fixé rigidement à celle-ci.

7. Dispositif selon la revendication 1, caractérisé en ce que le guide est constitué par un logement de capsule (1, 2), qui est raccordé au mécanisme d'entraînement en oscillation (4) et dans lequel le premier corps frappeur (13) est mobile librement dans la direction de vibration (5), et en ce que le second corps frappeur est constitué par le logement de capsule (1, 2).

8. Dispositif selon la revendication 7, caractérisé en ce que la partie (7) de la capsule qui forme l'espace de mélange (8) est fixée rigidement au logement de capsule (1, 2).

9. Dispositif selon la revendication 7, caractérisé en ce que la capsule (6) est mobile librement dans la direction de vibration dans le logement de capsule (1, 2).

10. Dispositif selon la revendication 1, caractérisé en ce que le guide (31, 42) est fixé rigidement à la capsule (6) et le premier corps frappeur (34, 44) y est mobile, le second corps frappeur étant constitué par la partie (7) de la capsule qui forme l'espace de mélange (8) et éventuellement par des parties (3, 4) du mécanisme d'entraînement en oscillation fixées rigidement à cette partie de la capsule.

11. Dispositif selon la revendication 10, caractérisé en ce que le premier corps frappeur (34) est mobile librement dans le guide (31).

12. Dispositif selon la revendication 10, caractérisé en ce que le corps frappeur (44) est pressé contre la chambre (11) par la force d'un ressort.

13. Dispositif selon la revendication 11 ou 12, caractérisé en ce que le guide (31) ou le corps frappeur (44) est réalisé sous forme de piston.

14. Dispositif selon l'une quelconque des revendications 1 à 13, caractérisé en ce que la course de déplacement libre du corps frappeur mobile librement (7; 13, 7, 28) par rapport à son guide (1, 2; 31; 26 à 29) est au moins égale à un dixième environ de l'amplitude du mécanisme d'entraînement en oscillation.

15. Dispositif selon l'une quelconque des revendications 1 à 14, caractérisé en ce que la masse du corps frappeur mobile librement est inférieure à 10 g.

Fig. 7

38    8    37    9    10    11    36    31a    34    31b

32    35    39

Fig. 8

3    37    11    44

45    10    42    47

Fig. 10

44    46

Fig. 9

Fig. 1

Fig. 4

Fig. 2

Fig. 3

Fig. 5

Fig. 6